# EUROPEAN PATENT SPECIFICATION

(11) **EP 3 996 024 B1**
(45) Date of publication and mention of the grant of the patent: **06.05.2026**
(21) Application number: 21196846.6
(22) Date of filing: 15.09.2021
(51) Int. Cl.: G06Q 30/0601, G06Q 30/06

(54) **ELECTRONIC TRADING SYSTEM AND DATA CONCEALMENT METHOD FOR ELECTRONIC TRADING SYSTEM**
ELEKTRONISCHES HANDELSSYSTEM UND DATENVERSCHLEIERUNGSVERFAHREN FÜR EIN ELEKTRONISCHES HANDELSSYSTEM
SYSTÈME DE COMMERCE ÉLECTRONIQUE ET PROCÉDÉ DE MASQUAGE DE DONNÉES POUR SYSTÈME DE COMMERCE ÉLECTRONIQUE

(30) Priority: 05.11.2020 JP 2020185357
(43) Date of publication of application: 11.05.2022
(73) Proprietor: Hitachi, Ltd., Tokyo 100-8280 (JP)
(72) Inventor: FUKUNAKA, Katsuhiro, Chiyoda-ku, 100-8280 (JP)
(74) Representative: Mewburn Ellis LLP

(56) References cited:
- US-A1- 2019 354 967
- US-A1- 2020 028 688

## Description

### BACKGROUND OF THE INVENTION

### 1. Field of the Invention

The present invention relates to a technique that conceals a portion of electronic trading data shared by a large number of participants.

### 2. Description of the Related Art

In recent years, a "blockchain" has been attracting attention as a technology to support Bitcoin. Trading data (history) is referred to as a "transaction". In the "blockchain", a group of a plurality of transactions is referred to as a "block", and the blocks are stored so as to be continuous.

The "blockchain" has the feature that anyone can check all of the trading histories recorded on the blockchain, such as the buying and selling of Bitcoin, from a distributed ledger. That is, the blockchain has the feature that, since the fairness of trading is guaranteed by each node constituting the blockchain, the content of the trading is basically disclosed.

Therefore, it is difficult to carry out trading and payment related to sensitive data desired to be concealed from a third party in the blockchain.

For example, JP 2019-106639 A discloses a technique that guarantees the confidentiality of transactions and the fairness of trading in a blockchain.

JP 2019-106639 A discloses an electronic trading device that constitutes a node of a blockchain related to the trading of electronic data. The electronic trading device includes: a receiving unit that receives a first transaction including electronic data encrypted by an encryption key in a terminal for transmitting the electronic data to be traded and a second transaction including the encryption key encrypted by a public key related to a terminal for receiving the electronic data; and a verification unit that, when receiving an electronic data verification request which is transmitted from the receiving terminal and includes a private key corresponding to the public key, decrypts the encryption key using the private key, decrypts the electronic data using the decrypted encryption key, and verifies the decrypted electronic data. As described above, in JP 2019-106639 A, the fairness of the trading is guaranteed without disclosing the content of the data traded by the encryption technology to all of the nodes constituting the blockchain.

However, in JP 2019-106639 A, it is necessary to manage the correspondence relationship (combination) among the encryption key, the public key, and the private key for each transaction. When the number of transactions or trading participants increases, the number of combinations of the encryption keys, the public keys, and the private keys increases explosively, which makes it difficult to manage them. In other words, it is necessary to manage the correspondence relationship among the encryption key used by the transmitting terminal to encrypt the electronic data (trading data), the public key which is related to the receiving terminal and is used by the receiving terminal to encrypt the encryption key, and the private key which corresponds to the public key related to the receiving terminal and is transmitted from the receiving terminal for each transaction in order to ensure the confidentiality of trading.

In addition, it is considered that the number of transactions increases as the number of trading participants increases. Therefore, it is considered that it becomes more difficult to manage the correspondence relationship among the encryption key, the public key, and the private key.

Further, the trading data encrypted by the encryption key is transmitted as a transaction to the blockchain and is then stored in each node. Therefore, when a cryptanalysis technology is improved in the future, there is a concern that the content of the trading data will be seen by each node.

US 2019/354967 A1 discloses a method and apparatus for management of a blockchain-based subject data, the method including creating subject data in accordance with a request of a user device; creating first metadata related to the subject data; creating a first block including the first metadata to store the first block in a blockchain included in the apparatus; creating first code information based on information included in the first block; and storing the first code information and the subject data in a database. US 2020/028688 A1 discloses a computing device associated with a first blockchain node which receives a transaction request along with related data for storage in an off-chain storage.

### SUMMARY OF THE INVENTION

Accordingly, an object of the invention is to provide an electronic trading system and a data concealment method for an electronic trading system that can manage the confidentiality of trading data using a blockchain with a small amount of information.

In addition, another object of the invention is to provide an electronic trading system and a data concealment method for an electronic trading system that can reduce a storage capacity for storing transactions without concern that the trading data will be decrypted.

In order to achieve the above object, according to an aspect of the invention, there is provided an electronic trading system in which a blockchain managing an electronic trading of a trading target is managed by a plurality of nodes, as defined in the appended claims.

In addition, according to another aspect of the invention, there is provided a data concealment method for an electronic trading system in which a blockchain managing an electronic trading of a trading target is managed by a plurality of nodes, as defined in the appended claims.

According to the invention, it is possible to manage the confidentiality of trading data using a blockchain with a small amount of information.

In addition, according to the invention, it is possible to reduce a storage capacity for storing transactions without concern that the trading data will be decrypted.

### BRIEF DESCRIPTION OF THE DRAWINGS

Fig. 1 is a diagram illustrating a configuration of an electronic trading system according to an embodiment;
Fig. 2 is a hardware block diagram illustrating a management node of the electronic trading system according to the embodiment;
Fig. 3 is a diagram illustrating an example of metadata in the embodiment;
Fig. 4 is a diagram illustrating an example of data (actual data) desired to be concealed in the content of trading in the embodiment;
Fig. 5 is a diagram illustrating an example of metadata and actual data associated with the content of trading in the electronic trading system according to the embodiment;
Fig. 6 is a diagram illustrating another example of the metadata and the actual data associated with the content of trading in the electronic trading system according to the embodiment;
Fig. 7 is a diagram illustrating still another example of the metadata and the actual data associated with the content of trading in the electronic trading system according to the embodiment;
Fig. 8 is a flowchart illustrating a metadata update and actual data storage process during trading in the embodiment;
Fig. 9 is a flowchart illustrating a process when an actual data reference request is transmitted from a client unit in the embodiment; and
Fig. 10 is a flowchart illustrating a process when the actual data reference request is transmitted from the client unit in the embodiment.

### DETAILED DESCRIPTION OF THE PREFERRED EMBODIMENTS

Hereinafter, embodiments will be described with reference to the drawings. In addition, in the following description, various kinds of information are explained by an expression such as a "table", but may be expressed by data structures other than the table. Further, the "table" can be called "management information" in order to indicate that it does not depend on the data structure.

In addition, in some cases, a process is described using a "program" as the subject. The program is executed by a processor which is a processing unit, for example, a microprocessor (MP) or a central processing unit (CPU) and performs a predetermined process. Further, since the processor performs a process while using a storage resource (for example, a memory) and a communication interface device (for example, a communication port), the subject of the process may be the processor or the processing unit. The processor may have dedicated hardware in addition to the CPU. Computer programs may be installed in each computer from program sources. The program source may be provided by, for example, a program distribution server or a storage medium.

Further, the same portions are denoted by the same reference numerals in the drawings and explanations of the embodiments. In addition, each component may be plural or singular unless otherwise specified.

### [Embodiment 1]

### <System Configuration>

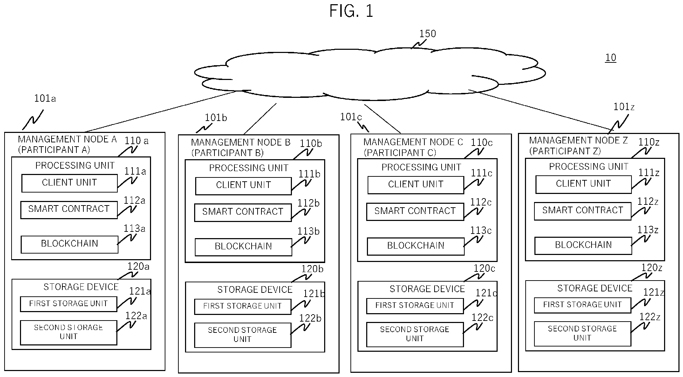

Fig. 1 is a diagram illustrating an example of the configuration of an electronic trading system according to this embodiment. In Fig. 1, an electronic trading system 10 includes a plurality of management nodes 101 (101a, 101b, 101c, and 101z) which are used by users and transmit and receive electronic data through a network 150 such as the Internet.

In Fig. 1, a one-to-one relationship between participants and management nodes in a blockchain is illustrated in order to facilitate the understanding of the invention. That is, a participant A company uses a management node A 101a, a participant B company uses a management node B 101b, a participant C company uses a management node C 101c, and a participant Z company uses a management node Z 101z. Then, it is premised that trading targets, such as parts, products, and services, are traded (electronically traded) as electronic data from the A company to the B company or the C company. However, this embodiment is not limited thereto and covers a wide range of electronic trading. Further, in the specification, for example, in some cases, an act of trading the trading targets from the A company to the B company is described as an act of transmitting and receiving transactions (trading data) between the management node A and the management node B.

For the management nodes, a plurality of nodes can be created from one physical node or one management node can be created from a plurality of nodes by a virtualization technology using a virtual machine (VM) or a container technology.

In each management node 101, the processing unit executes software constituting a client application, a smart contract, and a blockchain to implement the functions of a client unit 111, a smart contract management unit 112, and a blockchain management unit 113.

The client unit 111 has a function of transmitting an electronic trading request or an electronic transaction reference request. The smart contract management unit 112 has a function of automatically performing confirmation and fulfillment of contract conditions. The blockchain management unit 113 has a function of managing a distributed ledger of the blockchain. In Fig. 1, the client unit implemented by the client application is illustrated, the smart contract management unit is abbreviated to a smart contract, and the blockchain management unit is abbreviated to a blockchain.

The blockchain is obtained by adding an edit history sharing processing mechanism for sharing the edit history of a distributed database to the distributed database constructed by a distributed database technology and is constructed by a plurality of management nodes 101 connected by the network 150.

In addition, the blockchain is not limited to that having the processing mechanism for sharing the edit history of the distributed database on the basis of the characteristics of a one-way hash function, such as Ethereum or Bitcoin, and may be a blockchain that has a processing mechanism for sharing the edit history using another structure and shares the distributed database.

In addition, the blockchain is not limited to that having the mechanism which is added to the distributed database and adds a group of data as a block to update the data, such as Ethereum or Bitcoin, and may be a blockchain having a mechanism that sequentially adds individual data one by one to update the data, a blockchain having a mechanism that irregularly adds data to update the data, or a blockchain having a mechanism that adds data in other forms to update the data.

Furthermore, the blockchain is not limited to that which adds the data recorded on the distributed database as one-dimensional data that is continuous like a single chain, such as Ethereum or Bitcoin, and may be a blockchain which adds data to a plurality of chains in parallel, a blockchain which adds data in a network form, a blockchain which adds data in a two-dimensional plane, a blockchain which adds data multi-dimensionally, such as three-dimensionally, or a blockchain which adds data in other forms.

The blockchain is not a single node, but is a network composed of a plurality of nodes constituting the blockchain. Transmitting the transaction or the metadata stored in the distributed ledger to the entire blockchain network is referred to as broadcasting.

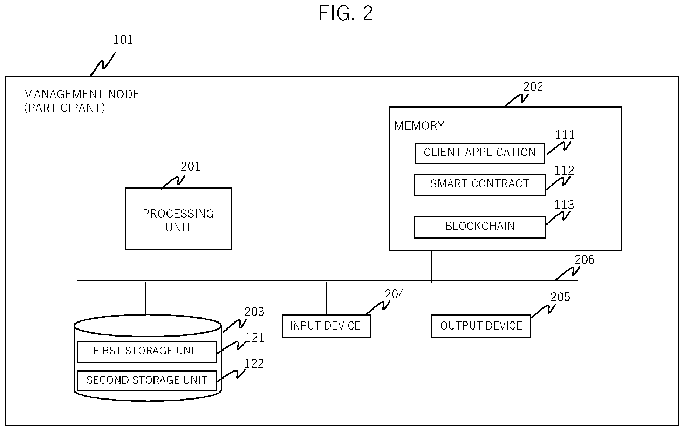

Fig. 2 is a hardware block diagram illustrating the management node of the electronic trading system according to the embodiment.

As illustrated in Fig. 2, the physical entity of the management node 101 is a general computer including a storage device 203 that consists of a non-volatile storage element, such as an SSD, a memory 202 that consists of a volatile storage element, such as a RAM, a processing unit 201, such as a CPU, that reads a program stored in the storage device 203 to the memory 202, executes the program to control the overall operation of the device, and performs various determinations, calculations, and control processes, an input device 204 that receives a key input or a voice input from the user, an output device 205, such as a display, that displays processing data, a communication device (not illustrated) that is connected to the network 150 and takes charge of a communication process with other devices, and a connection device 206, such as a bus, that connects the processing unit 201, the memory 202, the storage device 203, the input device 204, the output device 205, and the communication device.

In addition, in the management node 101, each of the client unit 111, the smart contract management unit 112, and the blockchain management unit 113 is implemented by software, and the processing unit 201 executes the software to implement the functions of the client unit 111 that transmits the electronic trading request or the electronic trading reference request, the smart contract management unit 112 that automatically performs the confirmation or fulfillment of the contract conditions, and the blockchain management unit 113. Further, in the drawings, the client unit is described as a client application, the smart contract management unit is abbreviated to a smart contract, and the blockchain management unit is abbreviated to a blockchain.

In addition, the storage device 203 of the management node 101 includes a first storage unit 121 that stores the distributed ledger of the blockchain as metadata and a second storage unit 122 that stores a transaction (trading data) which is desired to be concealed from some of the participants constituting the blockchain in the transactions. The transaction (the content of the trading data) desired to be concealed which is stored in the second storage unit is referred to as "actual data".

In the blockchain, the fairness of the trading is guaranteed by each of the management nodes constituting the blockchain. Therefore, the blockchain has the feature that the content of the trading is basically disclosed. However, this embodiment provides a technique which conceals some of the transactions (trading data) as the actual data from some of the participants of the blockchain. Some of the participants of the blockchain from which the actual data is concealed are, for example, participants other than the participants that actually trade the trading targets.

### <Management Information>

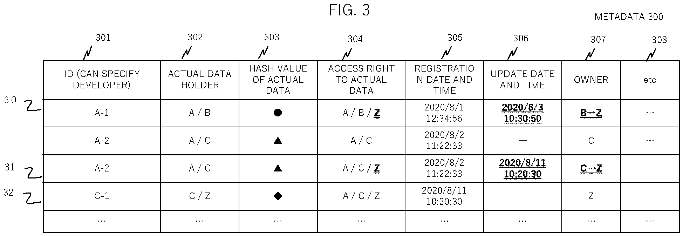

Fig. 3 is a diagram illustrating an example of the metadata according to the embodiment. Metadata 300 is stored as the distributed ledger of the blockchain and is shared by all of the management nodes constituting the blockchain. The metadata 300 is stored in the first storage unit 121 of the storage device 120 in each management node 101.

An ID 301 is, for example, information for identifying a product to be traded and is information that can specify the developer of the product.

An actual data holder 302 is information indicating the management node (participant) that stores the actual data to be concealed from other participants constituting the blockchain in the second storage unit 122.

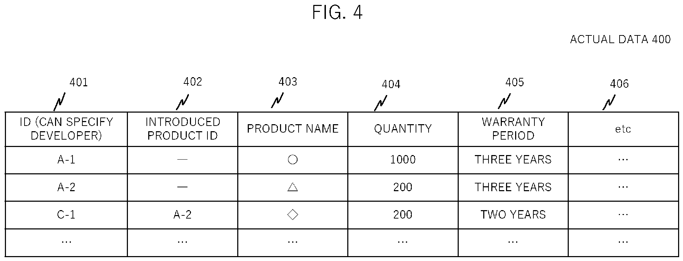

A hash value 303 of the actual data is a hash value of the actual data managed corresponding to the ID 301 illustrated in Fig. 4.

An access right 304 to the actual data is information indicating the management node (participant) having an access right to the actual data stored in the second storage unit 122.

A registration date and time 305 is information indicating the date and time when the entries 302 to 308 of the ID 301 were registered.

An update date and time 306 is information indicating the date and time when any of the entries 303, 304, 307, and 308 of the ID 301 was updated.

An owner 307 is information indicating the owner of the product identified by the ID 301. Other information 308 can also be included in the metadata 300.

For the metadata 300, for example, an entry 30 represented by a row shows that the Z company is added to the access right 304 to the actual data, the update date and time 306 is updated, and the owner 307 of a product A-1 is changed from the B company to the Z company by a trading in which the B company transfers the product A-1 to the Z company without processing the product A-1.

In addition, in the metadata 300, entries 31 and 32 represented by rows show that the Z company is added to the access right 304 to the actual data, the update date and time 306 is updated, and the owner 307 of a product A-2 is changed from the C company to the Z company by a trading in which the C company transfers a product C-1 obtained by processing the product A-2 to the Z company.

As described above, the entry in each row of the metadata 300 is added when the trading for the product identified by the ID 301 is confirmed. This corresponds to that a transaction is confirmed in the blockchain and is added to the blockchain stored in the distributed ledger.

In addition, the ID in Fig. 3 has been described as the information for identifying a product. However, the ID is not limited thereto and may be information for identifying a trading target such as a service or a part.

Fig. 4 is a diagram illustrating an example of the trading data (actual data) desired to be concealed in the content of the trading in the embodiment. For example, actual data 400 is managed such that an ID 401, an introduced product (other company manufactured product and/or product supplied by other company etc) ID 402, a product name 403, a quantity 404, a warranty period 405, and other data 406 correspond to each other.

The ID 401 is, for example, information for identifying a product to be traded and is information that can specify the developer of the product, similarly to the ID 301 illustrated in Fig. 3.

The introduced product ID 402 stores, for example, information for identifying an introduced product A-2 in a case in which the product C-1 includes the introduced product A-2. The product name 403 stores the name of a product or a part, the quantity 404 stores the number of products, and the warranty period 405 stores information of the warranty period of a product or a part. The actual data 400 illustrated in Fig. 4 is an example. The actual data is information that is desired to be concealed from other participants constituting the blockchain.

The first storage unit 121 storing the metadata illustrated in Fig. 3 may be a storage device 120 that is physically different from the second storage unit 122 storing the actual data desired to be concealed in Fig. 4, may be configured by logically dividing a storage area of the storage device 120, or may be configured to be stored in a different directory such as a file system. The second storage unit 122 is preferably an area that is more secure.

### <Update of Metadata and Actual data Associated with Content of Trading>

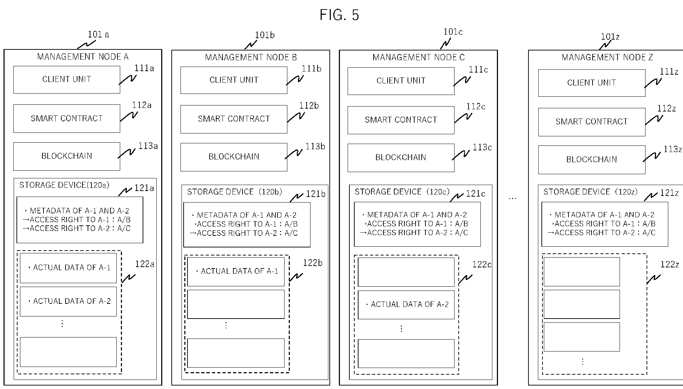

Fig. 5 is a diagram illustrating an example of the metadata and the actual data associated with the content of the trading in the electronic trading system according to the embodiment. Specifically, Fig. 5 is a diagram illustrating the metadata and the actual data at the time when the product A-1 produced by the A company (the participant using the management node A) is transferred to the B company (the participant using the management node B) and the product A-2 is transferred to the C company (the participant using the management node C).

In this case, since the product A-1 has been transferred from the A company to the B company, information indicating that the access right to the product A-1 is granted to the A and B companies is stored in the metadata stored in the first storage unit 121a of the management node A 101a.

In addition, since the product A-2 has been transferred from the A company to the C company, information indicating that the access right to the product A-2 is granted to the A and C companies is stored in the metadata stored in the first storage unit 121a of the management node A 101a.

The actual data of the product A-1 and the actual data of the product A-2 are stored in the second storage unit 122a of the management node A 101a.

In addition, the same metadata as that stored in the first storage unit 121a of the management node A is stored in the first storage unit 121b of the management node B 101b, the first storage unit 121c of the management node C, and the first storage unit 121z of the management node Z. Information related to the access right is shared by all of the management nodes participating in the blockchain.

On the other hand, the actual data of the product A-1 is stored in the second storage unit 122a of the management node A and the second storage unit 122b of the management node B used by the A and B companies that actually trade the product A-1, respectively.

The actual data of the product A-2 is stored in the second storage unit 122a of the management node A and the second storage unit 122c of the management node C used by the A and C companies that actually trade the product A-2, respectively.

As described above, in this embodiment, the data (actual data) desired to be concealed is stored only in the management nodes used by the participants that carry out the trading and is not stored in the other management nodes. Therefore, the storage capacity of the electronic trading system can be reduced as compared to a case in which the actual data is stored in all of the management nodes constituting the blockchain.

In addition, as compared to a case in which concealment is performed using the encryption technology, the correspondence relationship between an encryption key, a public key, and a private key or an operation of exchanging the information of each key is not needed for each transaction, and the access right to the actual data is stored as the metadata in the distributed ledger.

Further, since the data (actual data) desired to be concealed is stored only in the management nodes used by the participants that carry out the trading, it is possible to reduce the risk that each node will see the trading data even though the decryption technology is improved in the future.

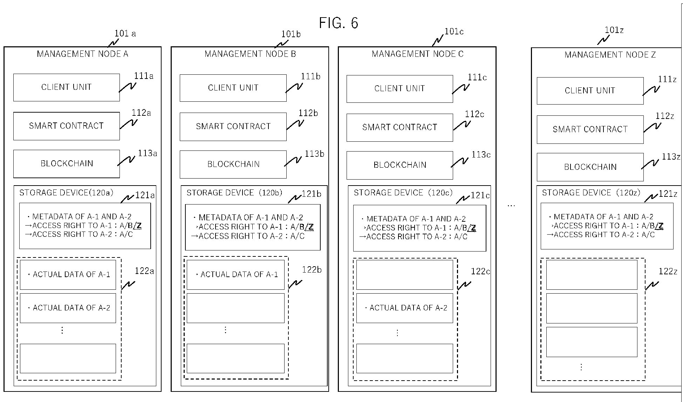

Fig. 6 is a diagram illustrating another example of the metadata and the actual data associated with the content of the trading in the electronic trading system according to the embodiment. Specifically, Fig. 6 illustrates the update of the metadata stored in the first storage unit 121 and the state of the actual data stored in the second storage unit 122 in a case in which the B company B wholesales (provides or transfers; hereinafter, referred to as "transfers") the product A-1 to the Z company without processing the product A-1 from the state illustrated in Fig. 5.

The access right to access the actual data of the product A-1 is given to the Z company by the transaction in which the product A-1 is transferred from the B company to the Z company and is shared as the metadata by each management node.

On the other hand, since the actual data of the product A-1 has already been stored by the management node A and the management node B and the B company transfers the product A-1 to the Z company without processing the product A-1, the actual data is not stored in the management node Z and remains stored in two management nodes of the management nodes A and B.

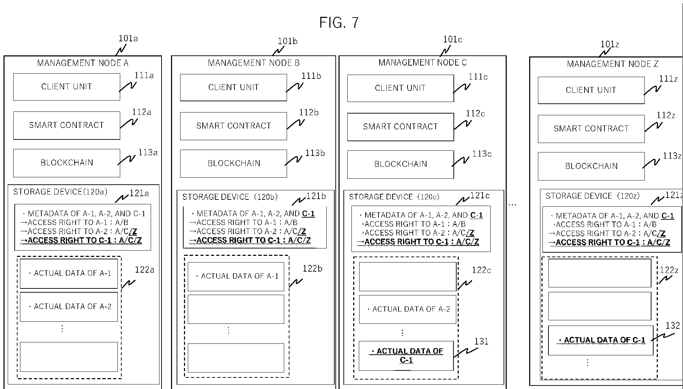

Fig. 7 is a diagram illustrating still another example of the metadata and the actual data associated with the content of the trading in the electronic trading system according to the embodiment. Specifically, Fig. 7 illustrates the update of the metadata stored in the first storage unit 121 and the state of the actual data stored in the second storage unit 122 in a case in which the C company transfers the product C-1 obtained by processing the product A-2 to the Z company from the state illustrated in Fig. 5.

In this stage, since the product C-1 has been produced, the product C-1 is added to the metadata. Therefore, it is desirable for the Z company to access the actual data of the product A-2, which is a material for producing the product C-1, in addition to the product C-1 that has been transferred. As a result, the Z company is given the access right to the product A-2. On the other hand, it is desirable for the actual data of the product C-1 to be accessed by the A company, which is the producer of the product A-2 that is the material of the product C-1, the C company C, which has processed the product A-2 into the product C-1 and transferred it to the Z company, and the Z company Z which has received the transfer of the product C-1. Therefore, the A company, the C company, and the Z company are given the access right.

Actual data 131 and actual data 132 of the product C-1 are stored in the second storage units 122 of the management nodes used by the C company which is the producer and the Z company that has received the transfer of the product C-1.

As described above, the actual data is stored in the management nodes used by the participants that carry out the trading and is not stored in the management nodes of the other participants that do not carry out the trading. Therefore, in a case in which the trading data are concealed using the encryption technology, it is possible to reduce the storage area for storing the actual data in the entire electronic trading system, as compared to the case in which the encrypted trading data are stored in all of the management nodes.

In addition, in the concealment technology using encryption, it is necessary to manage the correspondence relationship between the encryption key, the public key, and the private key for each trading (for each transaction). In contrast, in the metadata according to this embodiment, it is necessary to manage only the access right to the actual data.

Further, when the encrypted actual data is stored in each management node, the confidentiality of the actual data will be lost in a case in which the codes are broken in the future. However, in this embodiment, the actual data is not stored in all of the management nodes, the confidentiality of the actual data can be ensured.

### <Procedure of Process>

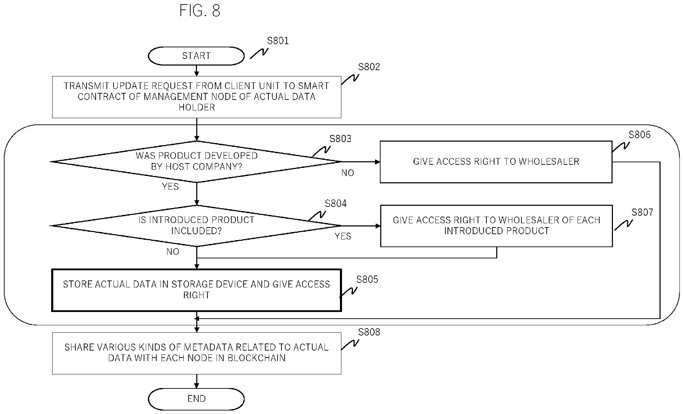

Fig. 8 is a flowchart illustrating a metadata update and actual data storage process during trading in the embodiment. The procedure of storing the metadata and the actual data illustrated in Figs. 5 to 7 will be described with reference to Fig. 8. In addition, in the procedure of the process illustrated in Figs. 8 to 10, an operation in a case in which Hyperledger Fabric is used as the blockchain management unit will be described. However, the invention is not limited to Hyperledger Fabric.

When the process is started (Step S801), the client unit 111 transmits an update request to the smart contract management unit of the management node of the actual data holder (Step S802). The client unit 111 of the management node that carries out the trading transmits a trading request to the smart contract management unit 112 of the same management node in order to trade electronic data. Then, when receiving the trading request, the smart contract management unit 112 transmits an electronic data trading request to the smart contract management unit 112 of the management node (the management node of the actual data holder) that manages the trading target.

Hereinafter, a description will be made using a flowchart on the premise that the above-mentioned operation is performed.

For example, an operation in a case in which a first trading that transfers the product A-1 from the A company to the B company and a trading that transfers the product A-1 from the B company to the Z company after the first trading are performed is assumed.

That is, for the product A-1, the state illustrated in Fig. 5 and a case in which a trading for changing the state from the state illustrated in Fig. 5 to the state illustrated in Fig. 6 is carried out will be described.

In Step S801, the client unit 111b of the management node B 100b transmits a request to order the product A-1 as the trading target from the A company to the smart contract management unit 112b of the management node B 100b. Then, the smart contract management unit 112b transmits an electronic trading request to the smart contract management unit 112a of the management node A 100a.

In addition, the client unit 111b may transmit the electronic trading request to the smart contract management unit 112a. At this time, each management node 101 can specify the management node A and the management node B that store the actual data of the product A-1 from the metadata stored in the first storage unit. Hereinafter, the description will be continued in the form in which the client unit requesting the trading transmits a request to trade the trading target, that is, an update request to the smart contract management unit of the management node that stores the actual data.

In Step S802, the client unit 111b of the B company transmits the update request to the smart contract management unit 112a of the management node A and the smart contract management unit 112b of the management node B.

In Step S803, the smart contract management units 112a and 112b determine whether the product A-1 was produced by the host company. Since the product A-1 was developed by the host company, the determination result of the smart contract management unit 112a is "YES", and the process proceeds to Step S804. Whether or not the product was developed by the host company is determined on the basis of whether or not the product A-1 was developed by the user who uses the client unit 111a, that is, whether or not the product A-1 is a product of the client of the transfer source.

Since the product A-1 does not include the introduced product, the determination result in Step S804 is "NO", and the process proceeds to Step S805. In addition, it is possible to determine whether or not the product includes the introduced product on the basis of the introduced product ID 402 included in the actual data illustrated in Fig. 4.

In Step S805, the actual data of the product A-1 is stored in the second storage unit 122a of the storage device 120a in the management node A. When the actual data of the product A-1 is stored in the second storage unit 122a in the state illustrated in Fig. 5, the actual data may be overwritten, or it may be only confirmed that the actual data has been stored. The management node storing the actual data of the product A-1 is given the access right to the actual data.

Further, for the smart contract management unit 112b of the management node B that has received the update request, the process in Steps 803 to 807 is the same as the process of the smart contract management unit 112a, and the actual data is stored in the second storage unit 122b of the management node B. As described above, the actual data is stored in the node used by the developer of the trading target and the node that has requested the developer to trade the trading target, and the access right to the actual data is given to the nodes.

On the other hand, in a case in which the B company wholesales the product A-1 to the Z company, since the product A-1 was developed by the A company, the determination result of the smart contract management unit 112b is "NO", and the process proceeds to Step S806. In Step S806, the access right to the product A-1 is given to the Z company which is a wholesaler.

In order to reflect the content of the access right given in Step S806, the blockchain management unit 113b updates the metadata connected with the actual data related to the product A-1 and broadcasts the metadata to each management node such that all of the management nodes share the updated metadata (Step S808).

Next, a case in which a trading changing the state from the state illustrated in Fig. 5 to the state illustrated in Fig. 7 is performed will be described.

Fig. 7 illustrates a trading in which the C company transfers the product C-1 obtained by processing the product A-2 to the Z company. In this case, in Step S802, the client unit that carries out the trading transmits a trading request to the smart contract management unit. For example, when the client unit 111z of the Z company transmits a trading request to the smart contract management unit 113z, the smart contract management unit 113z transmits an update request to conclude a trading contract to the smart contract management unit 113c.

In Step S803, the smart contract management unit 112c determines that the product C-1 is a product developed by the host company, and the process proceeds to Step S804.

In Step S804, it is determined whether or not the product C-1 includes an introduced product. Since the product C-1 includes the product A-1 as the introduced product, the process proceeds to Step S807.

In Step S807, the access right to the actual data of the product C-1 is given to the A company which is the wholesaler (the provider or transferor of the introduced product) of the product A-1 introduced from the product C-1.

Then, in Step S805, the actual data related to the product C-1 is stored in the storage device 120c of the management node C, and the management node C is given the access right to the actual data of the product C-1.

In Step S808, the updated metadata illustrated in Fig. 7 is broadcasted to each management node and is shared by each management node.

Further, for the smart contract management unit 112z, the process from Step 803 to Step 807 is the same as the process of the smart contract management unit 112b, and the actual data is stored in the second storage unit 122z of the management node Z. The management node Z is given the access right to the actual data of the product C-1.

In addition, in Fig. 8, Step S802 is the process of the client unit 111, Steps S803 to S807 are the process of the smart contract management unit 112, and Step S808 is the process of the blockchain management unit 113.

Further, the process of storing the actual data in the storage device in Step S805 may be performed at the time when the smart contract management unit 112 trades the trading target.

In the process illustrated in Fig. 8, since the actual data is stored in the two management nodes, it is possible to detect data falsification, for example, a case in which different actual data items are stored in the two management nodes.

Further, in a case in which a product is processed during the distribution of the product, it is possible to appropriately give the access right to the actual data of the product to the participants that trade the product before processing and the processed product and to conceal the actual data of the product from the other participants in the blockchain.

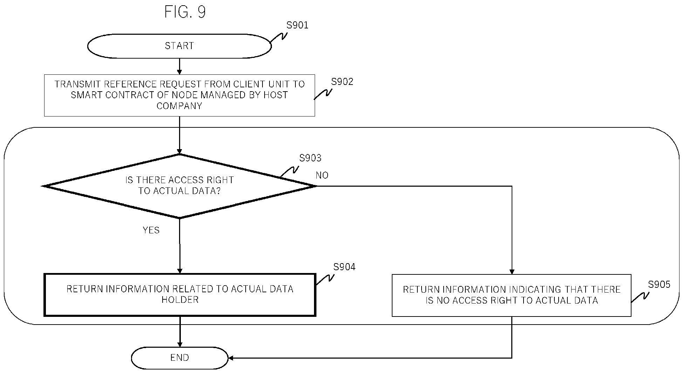

Fig. 9 is a flowchart illustrating a process when the client unit transmits the actual data reference request in the embodiment.

In Step S902, the client unit 111 transmits the reference request to the smart contract management unit 112.

When receiving the reference request from the client unit 111, the smart contract management unit 112 determines whether or not there is an access right to the actual data (Step S903). In a case in which there is an access right, the smart contract management unit 112 returns information related to the holder that holds the actual data to the client unit 111 (Step S904). The information related to the holder that holds the actual data is information related to other nodes having the access right and can be understood as a node which is likely to hold the actual data. In a case in which there is no access right, the smart contract management unit 112 returns information indicating that there is no access right to the actual data to the client unit 111 (Step S905).

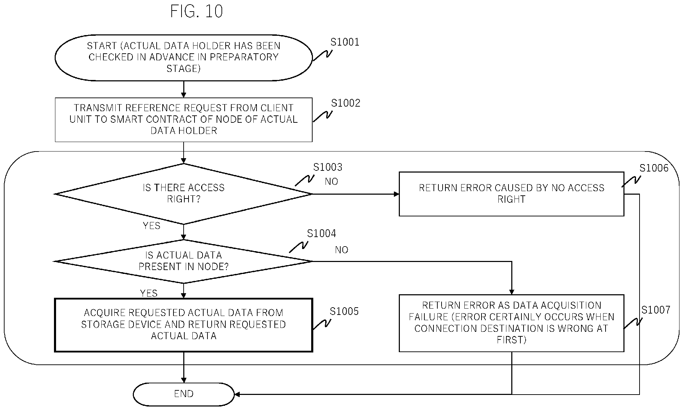

For example, when the client unit 111z of the Z company transmits a request to refer to the actual data of the product A-2 to the smart contract management unit 112z from the state illustrated in Fig. 7, the access right to access the product A-2 is given to the A company, the C company, and the Z company in the metadata stored in the first storage unit 121z of the management node Z. Therefore, information related to the A company and the C company that hold the actual data related to the product A-2 is returned as the information related to the actual data holders in Step S904. In a case in which the access right is given to many participants, it is unclear which of them holds the actual data. However, in Step S904, information related to other participants that are given the access right is returned to the client unit. A process in a case in which the management node of the information returned in Step S904 does not hold the actual data will be described with reference to Fig. 10.

On the other hand, when the client unit 111z transmits a request to refer to the actual data of the product A-1 to the smart contract management unit 112z, information indicating that there is no access right to the actual data is returned in Step S905 since the access right to the actual data of the product A-1 is not given to the Z company.

In addition, Step S902 illustrated in Fig. 9 is the process of the client unit 111, and Steps S903 to S905 are the process of the smart contract management unit 112.

Fig. 10 is a flowchart illustrating a process when the client unit transmits an actual data reference request in the embodiment.

In the process illustrated in Fig. 9, the client unit 111 that has received the information related to the actual data holder transmits the reference request to the smart contract management unit of the management node (the management node used by the actual data holder) according to the information related to the actual data holder (Step S1002).

In Step S1003, the smart contract management unit 112 that has received the reference request from the client unit 111 determines whether or not the client unit 111 (the user of the management node) that has transmitted the reference request has the access right. The reason is that the metadata is supposed to be shared by each management node and a double check is performed to prevent unauthorized access caused by the falsification of the access right to the metadata. The client unit 111 that has transmitted the reference request and the smart contract management unit 112 that has received the reference request are usually present in different management nodes.

In a case in which there is no access right, the process proceeds to Step S1006, and an error caused by no access right is returned to the client unit that has transmitted the reference request. Then, the process ends.

On the other hand, in a case in which there is an access right in Step S1003, the process proceeds to Step S1004, and it is determined whether or not the actual data is present in the second storage unit 122 of the management node 101 having the smart contract management unit 112 that has received the reference request. The reason why the determination in Step S1004 is necessary is that the participant that is likely to hold the actual data can be specified only by the access right, but all of the participants given the access right do not hold the actual data.

In a case in which the requested actual data has been stored, in Step S1005, the requested actual data is acquired from the storage device 120 and is then returned to the client unit 111 which is the source of the reference request.

On the other hand, in a case in which the requested actual data has not been stored, the smart contract management unit 112 returns an error as a data acquisition failure to the client unit 111 which is the source of the reference request. In addition, when the information of the management node storing the actual data (the information related to the actual data holder) is incorrect in the process illustrated in Fig. 9, the actual data is not stored in the management node in which the client unit 111 transmits the reference request, and an error is returned. The client unit to which the error has been returned may transmit the reference request to the smart contract management units of the management nodes used by other participants to which the access right has been set in the metadata.

In Fig. 10, Step S1002 is the process of the client unit 111, and Steps S1003 to S1007 are the process of the smart contract management unit 112.

The procedures of the processes illustrated in Figs. 8 to 10 explain the operation in a case in which Hyperledger Fabric is used as the blockchain management unit, but can be applied to other blockchain platforms using the concept of, for example, giving the access right and storing the actual data in Embodiment 1.

According to Embodiment 1, it is possible to manage the confidentiality of the data (actual data) desired to be concealed with a small amount of information in the blockchain.

Further, according to Embodiment 1, the actual data is not stored in each management node participating in the blockchain. Therefore, it is possible to reduce the risk that the transactions (trading data) will be deciphered and to reduce the storage capacity for storing the transactions (trading data).

In addition, as compared to the case in which data is concealed by the encryption technology, it is not necessary to manage the correspondence relationship among the encryption key, the public key, and the private key and to perform the operation of exchanging the information of each key for each transaction.

### [Embodiment 2]

In Embodiment 1, the actual data is stored in two management nodes among the management nodes constituting the blockchain. However, in Embodiment 2, a management node of a third-party organization for data verification which stores all of the actual data stored in each node is added.

The management node of the third-party organization includes a third storage unit that updates the metadata of the management node of the third-party organization and stores the updated metadata when a transaction occurs between the management nodes constituting the blockchain and the metadata of each node is updated and a fourth storage unit that stores all of the actual data which is a portion of the trading content of the transaction (data desired to be concealed from persons other than the persons concerned).

The management node of the third-party organization does not participate in the trading of, for example, the actual products, but manages all transactions. Therefore, the management node of the third-party organization can verify the data falsification of the management nodes constituting the blockchain.

As described above, according to each embodiment, it is possible to manage the confidentiality of the data (actual data) desired to be concealed with a small amount of information in the blockchain.

Further, according to each embodiment, the actual data is not stored in each management node participating in the blockchain. Therefore, it is possible to reduce the risk that the transactions will be deciphered and to reduce the storage capacity for storing the transactions.

Furthermore, according to each embodiment, as compared to the case in which data is concealed by the encryption technology, it is not necessary to manage the correspondence relationship among the encryption key, the public key, and the private key and to perform the operation of exchanging the information of each key for each transaction.

## Claims

1. An electronic trading system in which a blockchain managing an electronic trading of a first trading target is managed by a plurality of nodes,
wherein each of the plurality of nodes includes:
a client unit configured to transmit an electronic trading request for a trading target;
a smart contract management unit configured to automatically perform confirmation or fulfillment of contract conditions;
a blockchain management unit configured to manage a distributed ledger of the blockchain;
a first storage unit configured to store the distributed ledger of the blockchain; and
a second storage unit configured to store content of the trading target to be concealed as actual data if the node is granted an access right to access the actual data of the trading target, wherein:
the distributed ledger stored in the first storage unit is stored in all of the plurality of nodes managing the blockchain and is shared by all of the plurality of nodes;
a first node among the plurality of nodes is configured to transmit the electronic trading request for a first trading target to a second node configured to manage the first trading target;
the smart contract management unit of the second node is configured to, upon receipt of the electronic trading request by the second node, by referring to the first trading target, decide whether to grant to the first node an access right to access the actual data of the first trading target stored in the second storage unit of the second node and store the access right in the distributed ledger; and
the first node is configured to store the actual data of the first trading target in the second storage unit of the first node if the access right is granted to the first node by the second node, with the actual data of the first trading target not being stored in the second storage units of the other nodes constituting the blockchain.

2. The electronic trading system according to claim 1,
wherein, when receiving an electronic trading request related to the first trading target from the client unit of a third node among the plurality of nodes, the smart contract management unit of the second node is configured to determine whether or not the first trading target is a product developed by a user of the second node, and
in a case in which the first trading target is not the developed product, the smart contract management unit of the second node grants to the third node the access right to the actual data of the first trading target stored in the second storage unit of the second node.

3. The electronic trading system according to claim 2,
wherein, when receiving the electronic trading request related to the first trading target from the client unit of the third node, the smart contract management unit of the second node is configured to determine whether or not the first trading target is a product developed by the user of the second node, and
in a case in which the first trading target is the developed product, the smart contract management unit of the second node further determines whether or not the first trading target includes an introduced product, and
in a case in which the first trading target includes the introduced product, the smart contract management unit of the second node grants to a provider of the introduced product the access right to the actual data of the first trading target stored in the second storage unit of the second node.

4. The electronic trading system according to claim 3,
wherein, in a case in which the first trading target does not include the introduced product, the smart contract management unit of the second node is configured to store the actual data of the first trading target in the second storage unit of the second node.

5. The electronic trading system according to claim 4,
wherein the client unit of the third node is configured to transmit a request to refer to the actual data of the first trading target to the smart contract management unit of the third node, and
the smart contract management unit of the third node is configured to determine whether or not the third node has the access right to the actual data of the first trading target, return information related to other nodes having the access right to the client unit of the third node in a case in which the third node has the access right, and return information indicating that the third node does not have the access right to the client unit of the third node in a case in which the third node does not have the access right.

6. The electronic trading system according to claim 5,
wherein the client unit of the third node is configured to transmit the request to refer to the actual data of the first trading target to the smart contract management units of other nodes having the access right, and
the smart contract management units of other nodes having the access right are configured to determine whether or not the third node has the access right to the actual data of the first trading target, return an error to the third node in a case in which the third node does not have the access right, determine whether or not the actual data of the first trading target is stored in the second storage units of the host nodes in a case in which the third node has the access right, return the actual data of the first trading target to the third node in a case in which the actual data of the first trading target is stored, and return an error to the third node in a case in which the actual data of the first trading target is not stored.

7. The electronic trading system according to claim 1,
wherein the actual data of the first trading target is stored in a third-party organization in addition to the second storage units of the first node and the second node.

8. A data concealment method for an electronic trading system in which a blockchain managing an electronic trading of a first trading target is managed by a plurality of nodes,
wherein each of the plurality of nodes includes:
a client unit configured to transmit an electronic trading request for a trading target;
a smart contract management unit configured to automatically perform confirmation or fulfillment of contract conditions;
a blockchain management unit configured to manage a distributed ledger of the blockchain;
a first storage unit configured to store the distributed ledger of the blockchain; and
a second storage unit configured to store content of the trading target to be concealed as actual data if the node is granted an access right to access the actual data of the trading target, wherein
the distributed ledger stored in the first storage unit is stored in all of the plurality of nodes managing the blockchain and is shared by all of the plurality of nodes,
the method comprising:
transmitting, by a first node among the plurality of nodes, an electronic trading request for a first trading target to a second node configured to manage the first trading target;
receiving, by the second node, the electronic trading request and deciding, by the smart contract management unit of the second node, by referring to the first trading target, whether to grant to the first node an access right to access the actual data of the first trading target stored in the second storage unit of the second node and store the access right in the distributed ledger; and
storing, by the first node, the actual data of the first trading target in the second storage unit of the first node if the access right is granted to the first node by the second node, with the actual data of the first trading target not being stored in the second storage units of the other nodes constituting the blockchain.

9. The data concealment method for an electronic trading system according to claim 8,
wherein, when receiving an electronic trading request related to the first trading target from a third node among the plurality of nodes, the smart contract management unit of the second node determines whether or not the first trading target is a product developed by a user of the second node,
in a case in which the first trading target is not the developed product, the smart contract management unit of the second node grants to the third node the access right to the actual data of the first trading target stored in the second storage unit of the second node,
in a case in which the first trading target is the developed product, the smart contract management unit of the second node further determines whether or not the first trading target includes an introduced product, and
in a case in which the first trading target includes the introduced product, the smart contract management unit of the second node grants to a provider of the introduced product the access right to the actual data of the first trading target stored in the second storage unit of the second node.

10. The data concealment method for an electronic trading system according to claim 8,
wherein, in a case in which the first trading target does not include the introduced product, the smart contract management unit of the second node stores the actual data of the first trading target in the second storage unit of the second node.

## Patentansprüche

1. Elektronisches Handelssystem, in dem eine Blockchain, die einen elektronischen Handelsvorgang für ein erstes Handelsziel verwaltet, durch eine Vielzahl von Knoten verwaltet ist,
wobei jeder aus der Vielzahl von Knoten Folgendes umfasst:
eine Client-Einheit, die konfiguriert ist, um eine elektronische Handelsanfrage für ein Handelsziel zu übertragen;
eine Smart-Contract-Verwaltungseinheit, die konfiguriert ist, um automatisch eine Bestätigung oder Erfüllung von Vertragsbedingungen durchzuführen;
eine Blockchain-Verwaltungseinheit, die konfiguriert ist, um ein verteiltes Hauptbuch der Blockchain zu verwalten;
eine erste Speichereinheit, die konfiguriert ist, um das verteilte Hauptbuch der Blockchain zu speichern, und
eine zweite Speichereinheit, die konfiguriert ist, um Inhalte des Handelsziels zu speichern, die als tatsächliche Daten zu verbergen sind, wenn dem Knoten ein Zugriffsrecht zum Zugreifen auf die tatsächlichen Daten des Handelsziels erteilt wird, wobei:
das in der ersten Speichereinheit gespeicherte verteilte Hauptbuch in allen aus der Vielzahl von Knoten, welche die Blockchain verwalten, gespeichert ist und von allen aus der Vielzahl von Knoten gemeinsam verwendet wird;
ein erster Knoten aus der Vielzahl von Knoten konfiguriert ist, um die elektronische Handelsanfrage für ein erstes Handelsziel an einen zweiten Knoten zu übertragen, der konfiguriert ist, um das erste Handelsziel zu verwalten;
die Smart-Contract-Verwaltungseinheit des zweiten Knotens konfiguriert ist, um bei Empfang der elektronischen Handelsanfrage durch den zweiten Knoten bezugnehmend auf das erste Handelsziel zu entscheiden, ob dem ersten Knoten ein Zugriffsrecht zum Zugreifen auf die tatsächlichen Daten des ersten Handelsziels, die in der zweiten Speichereinheit des zweiten Knotens gespeichert sind, erteilt und das Zugriffsrecht in dem verteilten Handelsbuch gespeichert wird; und
der erste Knoten konfiguriert ist, um die tatsächlichen Daten des ersten Handelsziels in der zweiten Speichereinheit des ersten Knotens zu speichern, wenn dem ersten Knoten durch den zweiten Knoten das Zugriffsrecht erteilt wird, wobei die tatsächlichen Daten des ersten Handelsziels nicht in den zweiten Speichereinheiten der weiteren Knoten, welche die Blockchain bilden, gespeichert sind.

2. Elektronisches Handelssystem nach Anspruch 1,
wobei die Smart-Contract-Verwaltungseinheit des zweiten Knotens, wenn sie eine elektronische Handelsanfrage in Bezug auf das erste Handelsziel von der Client-Einheit eines dritten Knotens aus der Vielzahl von Knoten empfängt, konfiguriert ist, um zu bestimmen, ob das erste Handelsziel ein Produkt ist, das durch einen Benutzer des zweiten Knotens entwickelt wurde, und wobei
in dem Fall, dass das erste Handelsziel nicht das entwickelte Produkt ist, die Smart-Contract-Verwaltungseinheit des zweiten Knotens dem dritten Knoten das Zugriffsrecht für die tatsächlichen Daten des ersten Handelsziels, die in der zweiten Speichereinheit des zweiten Knotens gespeichert sind, erteilt.

3. Elektronisches Handelssystem nach Anspruch 2,
wobei die Smart-Contract-Verwaltungseinheit des zweiten Knotens, wenn sie die elektronische Handelsanfrage in Bezug auf das erste Handelsziel von der Client-Einheit des dritten Knotens empfängt, konfiguriert ist, um zu bestimmen, ob das erste Handelsziel ein Produkt ist, das durch einen Benutzer des zweiten Knotens entwickelt wurde, und
in dem Fall, dass das erste Handelsziel das entwickelte Produkt ist, die Smart-Contract-Verwaltungseinheit des zweiten Knotens ferner bestimmt, ob das erste Handelsziel ein eingeführtes Produkt umfasst, und
in dem Fall, in dem das erste Handelsziel das eingeführte Produkt umfasst, die Smart-Contract-Verwaltungseinheit des zweiten Knotens einem Anbieter des eingeführten Produkts das Zugriffsrecht für die tatsächlichen Daten des ersten Handelsziels, die in der zweiten Speichereinheit des zweiten Knotens gespeichert sind, erteilt.

4. Elektronisches Handelssystem nach Anspruch 3,
wobei in dem Fall, dass das erste Handelsziel das eingeführte Produkt nicht umfasst, die Smart-Contract-Verwaltungseinheit des zweiten Knotens konfiguriert ist, um die tatsächlichen Daten des ersten Handelsziels in der zweiten Speichereinheit des zweiten Knotens zu speichern.

5. Elektronisches Handelssystem nach Anspruch 4,
wobei die Client-Einheit des dritten Knotens konfiguriert ist, um eine Anfrage zum Bezugnehmen auf die tatsächlichen Daten des ersten Handelsziels an die Smart-Contract-Verwaltungseinheit des dritten Knotens zu übertragen, und
die Smart-Contract-Verwaltungseinheit des dritten Knotens konfiguriert ist, um zu bestimmen, ob der dritte Knoten das Zugriffsrecht für die tatsächlichen Daten des ersten Handelsziels besitzt, Informationen in Bezug auf weitere Knoten, die das Zugriffsrecht besitzen, an die Client-Einheit des dritten Knotens zurückzusenden, in dem Fall, dass der dritte Knoten das Zugriffsrecht besitzt, und Informationen, die anzeigen, dass der dritte Knoten das Zugriffsrecht nicht besitzt, an die Client-Einheit des dritten Knotens zurückzusenden, in dem Fall, in dem der dritte Knoten das Zugriffsrecht nicht besitzt.

6. Elektronisches Handelssystem nach Anspruch 5,
wobei die Client-Einheit des dritten Knotens konfiguriert ist, um die Anfrage zum Bezugnehmen auf die tatsächlichen Daten des ersten Handelsziels an die Smart-Contract-Verwaltungseinheiten weiterer Knoten, die das Zugriffsrecht besitzen, zu übertragen, und
die Smart-Contract-Verwaltungseinheiten von weiteren Knoten, die das Zugriffsrecht besitzen, konfiguriert sind, um zu bestimmen, ob der dritte Knoten das Zugriffsrecht für die tatsächlichen Daten des ersten Handelsziels besitzt, einen Fehler an den dritten Knoten zurückzusenden, in dem Fall, dass der dritte Knoten das Zugriffsrecht nicht besitzt, zu bestimmen, ob die tatsächlichen Daten des ersten Handelsziels in den zweiten Speichereinheiten der Host-Knoten gespeichert sind, in dem Fall, in dem der dritte Knoten das Zugriffsrecht besitzt, die tatsächlichen Daten des ersten Handelsziels an den dritten Knoten zurückzusenden, in dem Fall, dass die tatsächlichen Daten des ersten Handelsziels gespeichert sind, und einen Fehler an den dritten Knoten zurückzusenden, in dem Fall, dass die tatsächlichen Daten des ersten Handelsziels nicht gespeichert sind.

7. Elektronisches Handelssystem nach Anspruch 1,
wobei die tatsächlichen Daten des ersten Handelsziels zusätzlich zu den zweiten Speichereinheiten des ersten Knotens und des zweiten Knotens in einer Drittorganisation gespeichert sind.

8. Datenverbergungsverfahren für ein elektronisches Handelssystem, in dem eine Blockchain, die einen elektronischen Handelsvorgang für ein erstes Handelsziel verwaltet, durch eine Vielzahl von Knoten verwaltet wird,
wobei jeder aus der Vielzahl von Knoten Folgendes umfasst:
eine Client-Einheit, die konfiguriert ist, um eine elektronische Handelsanfrage für ein Handelsziel zu übertragen;
eine Smart-Contract-Verwaltungseinheit, die konfiguriert ist, um automatisch eine Bestätigung oder Erfüllung von Vertragsbedingungen durchzuführen;
eine Blockchain-Verwaltungseinheit, die konfiguriert ist, um ein verteiltes Handelsbuch der Blockchain zu verwalten;
eine erste Speichereinheit, die konfiguriert ist, um das verteilte Handelsbuch der Blockchain zu speichern, und
eine zweite Speichereinheit, die konfiguriert ist, um Inhalte des Handelsziels zu speichern, die als tatsächliche Daten zu verbergen sind, wenn dem Knoten ein Zugriffsrecht zum Zugreifen auf die tatsächlichen Daten des Handelsziels erteilt wird, wobei:
das in der ersten Speichereinheit gespeicherte verteilte Handelsbuch in allen aus der Vielzahl von Knoten, welche die Blockchain verwalten, gespeichert ist und von allen aus der Vielzahl von Knoten gemeinsam verwendet wird;
das Verfahren Folgendes umfasst:
Übertragen einer elektronischen Handelsanfrage für ein erstes Handelsziel durch einen ersten Knoten an einen zweiten Knoten, der konfiguriert ist, um das erste Handelsziel zu verwalten;
Empfangen der elektronischen Handelsanfrage durch den zweiten Knoten und Entscheiden durch die Smart-Contract-Verwaltungseinheit bezugnehmend auf das erste Handelsziel, ob dem ersten Knoten ein Zugriffsrecht zum Zugreifen auf die tatsächlichen Daten des ersten Handelsziels, die in der zweiten Speichereinheit des zweiten Knotens gespeichert sind, erteilt und das Zugriffsrecht in dem verteilten Handelsbuch gespeichert wird; und
Speichern der tatsächlichen Daten des ersten Handelsziels in der zweiten Speichereinheit des ersten Knotens durch den ersten Knoten, wenn dem ersten Knoten durch den zweiten Knoten das Zugriffsrecht erteilt wird, wobei die tatsächlichen Daten des ersten Handelsziels nicht in den zweiten Speichereinheiten der weiteren Knoten, welche die Blockchain bilden, gespeichert sind.

9. Datenverbergungsverfahren für ein elektronisches Handelssystem nach Anspruch 8,
wobei die Smart-Contract-Verwaltungseinheit des zweiten Knotens, wenn sie eine elektronische Handelsanfrage in Bezug auf das erste Handelsziel von einem dritten Knoten aus der Vielzahl von Knoten empfängt, konfiguriert ist, um zu bestimmen, ob das erste Handelsziel ein Produkt ist, das durch einen Benutzer des zweiten Knotens entwickelt wurde, und wobei
in dem Fall, dass das erste Handelsziel nicht das entwickelte Produkt ist, die Smart-Contract-Verwaltungseinheit des zweiten Knotens dem dritten Knoten das Zugriffsrecht für die tatsächlichen Daten des ersten Handelsziels, die in der zweiten Speichereinheit des zweiten Knotens gespeichert sind, erteilt,
in dem Fall, dass das erste Handelsziel das entwickelte Produkt ist, die Smart-Contract-Verwaltungseinheit des zweiten Knotens ferner bestimmt, ob das erste Handelsziel ein eingeführtes Produkt umfasst, und
in dem Fall, in dem das erste Handelsziel das eingeführte Produkt umfasst, die Smart-Contract-Verwaltungseinheit des zweiten Knotens einem Anbieter des eingeführten Produkts das Zugriffsrecht für die tatsächlichen Daten des ersten Handelsziels, die in der zweiten Speichereinheit des zweiten Knotens gespeichert sind, erteilt.

10. Datenverbergungsverfahren für ein elektronisches Handelssystem nach Anspruch 8,
wobei in dem Fall, dass das erste Handelsziel das eingeführte Produkt nicht umfasst, die Smart-Contract-Verwaltungseinheit des zweiten Knotens konfiguriert ist, um die tatsächlichen Daten des ersten Handelsziels in der zweiten Speichereinheit des zweiten Knotens zu speichern.

## Revendications

1. Système de transaction électronique dans lequel une chaîne de blocs gérant une transaction électronique d'une première cible de transaction est gérée par une pluralité de nœuds,
dans lequel chacun de la pluralité de nœuds inclut :
une unité client configurée pour transmettre une demande de transaction électronique pour une cible de transaction ;
une unité de gestion de contrat intelligente configurée pour effectuer automatiquement la confirmation ou l'exécution de conditions contractuelles ;
une unité de gestion de chaîne de blocs configurée pour gérer un registre distribué de la chaîne de blocs ;
une première unité de stockage configurée pour stocker le registre distribué de la chaîne de blocs ; et
une seconde unité de stockage configurée pour stocker le contenu de la cible de transaction à masquer en tant que données réelles si le nœud se voit accorder un droit d'accès aux données réelles de la cible de transaction, dans lequel :
le registre distribué stocké dans la première unité de stockage est stocké dans la totalité de la pluralité de nœuds gérant la chaîne de blocs et est partagé par la totalité de la pluralité de nœuds ;
un premier nœud parmi la pluralité de nœuds est configuré pour transmettre la demande de transaction électronique pour une première cible de transaction à un deuxième nœud configuré pour gérer la première cible de transaction ;
l'unité de gestion de contrat intelligente du deuxième nœud est configurée pour, à la réception de la demande de transaction électronique par le deuxième nœud, en se référant à la première cible de transaction, décider d'accorder ou non au premier nœud un droit d'accès aux données réelles de la première cible de transaction stockées dans la seconde unité de stockage du deuxième nœud et stocker le droit d'accès dans le registre distribué ; et
le premier nœud est configuré pour stocker les données réelles de la première cible de transaction dans la seconde unité de stockage du premier nœud si le droit d'accès est accordé au premier nœud par le deuxième nœud, les données réelles de la première cible de transaction n'étant pas stockées dans les secondes unités de stockage des autres nœuds constituant la chaîne de blocs.

2. Système de transaction électronique selon la revendication 1,
dans lequel lors de la réception d'une demande de transaction électronique relative à la première cible de transaction provenant de l'unité client d'un troisième nœud parmi la pluralité de nœuds, l'unité de gestion de contrat intelligente du deuxième nœud est configurée pour déterminer si oui ou non la première cible de transaction est un produit développé par un utilisateur du deuxième nœud, et
dans un cas dans lequel la première cible de transaction n'est pas le produit développé, l'unité de gestion de contrat intelligente du troisième nœud accorde au troisième nœud le droit d'accès aux données réelles de la première cible de transaction stockées dans la seconde unité de stockage du deuxième nœud.

3. Système de transaction électronique selon la revendication 2,
dans lequel, lors de la réception de la demande de transaction électronique liée à la première cible de transaction provenant de l'unité client du troisième nœud, l'unité de gestion de contrat intelligente du troisième nœud est configurée pour déterminer si oui ou non la première cible de transaction est un produit développé par l'utilisateur du troisième nœud, et
dans un cas dans lequel la première cible de transaction est le produit développé, l'unité de gestion de contrat intelligente du troisième nœud détermine en outre si la première cible de transaction comprend ou non un produit introduit, et
dans un cas dans lequel la première cible de transaction inclut le produit introduit, l'unité de gestion de contrat intelligente du deuxième nœud accorde à un fournisseur du produit introduit le droit d'accès aux données réelles de la première cible de transaction stockées dans la seconde unité de stockage du deuxième nœud.

4. Système de transaction électronique selon la revendication 3,
dans lequel, dans un cas dans lequel la première cible de transaction n'inclut pas le produit introduit, l'unité de gestion de contrat intelligente du troisième nœud est configurée pour stocker les données réelles de la première cible de transaction dans la seconde unité de stockage du deuxième nœud.

5. Système de transaction électronique selon la revendication 4,
dans lequel l'unité client du troisième nœud est configurée pour transmettre une demande de référence aux données réelles de la première cible de transaction à l'unité de gestion de contrat intelligente du troisième nœud, et
l'unité de gestion de contrat intelligente du troisième nœud est configurée pour déterminer si le troisième nœud a ou non le droit d'accès aux données réelles de la première cible de transaction, renvoyer des informations relatives à d'autres nœuds présentant le droit d'accès à l'unité client du troisième nœud dans un cas dans lequel le troisième nœud a le droit d'accès, et renvoyer des informations indiquant que le troisième nœud n'a pas le droit d'accès à l'unité client du troisième nœud dans un cas dans lequel le troisième nœud n'a pas le droit d'accès.

6. Système de transaction électronique selon la revendication 5,
dans lequel l'unité client du troisième nœud est configurée pour transmettre la demande de référence aux données réelles de la première cible de transaction aux unités de gestion de contrats intelligentes d'autres nœuds présentant le droit d'accès, et
les unités de gestion de contrat intelligentes d'autres nœuds présentant le droit d'accès sont configurées pour déterminer si oui ou non le troisième nœud a le droit d'accès aux données réelles de la première cible de transaction, renvoyer une erreur au troisième nœud dans un cas dans lequel le troisième nœud n'a pas le droit d'accès, déterminer si oui ou non les données réelles de la première cible de transaction sont stockées dans les secondes unités de stockage des nœuds hôtes dans un cas dans lequel le troisième nœud a le droit d'accès, renvoyer les données réelles de la première cible de transaction au troisième nœud dans un cas dans lequel les données réelles de la première cible de transaction sont stockées, et renvoyer une erreur au troisième nœud dans un cas dans lequel les données réelles de la première cible de transaction ne sont pas stockées.

7. Système de transaction électronique selon la revendication 1,
dans lequel les données réelles de la première cible de transaction sont stockées dans une organisation tierce en plus des secondes unités de stockage du premier nœud et du troisième nœud.

8. Procédé de masquage de données pour un système de transaction électronique dans lequel une chaîne de blocs gérant une transaction électronique d'une première cible de transaction est gérée par une pluralité de nœuds,
dans lequel chacun de la pluralité de nœuds inclut :
une unité client configurée pour transmettre une demande de transaction électronique pour une cible de transaction ;
une unité de gestion de contrat intelligente configurée pour effectuer automatiquement la confirmation ou l'exécution de conditions contractuelles ;
une unité de gestion de chaîne de blocs configurée pour gérer un registre distribué de la chaîne de blocs ;
une première unité de stockage configurée pour stocker le registre distribué de la chaîne de blocs ; et
une seconde unité de stockage configurée pour stocker le contenu de la cible de transaction à masquer en tant que données réelles si le nœud se voit accorder un droit d'accès aux données réelles de la cible de transaction, dans lequel
le registre distribué stocké dans la première unité de stockage est stocké dans la totalité de la pluralité de nœuds gérant la chaîne de blocs et est partagé par la totalité de la pluralité de nœuds,
le procédé comprenant les étapes consistant à :
transmettre, par l'intermédiaire d'un premier nœud parmi la pluralité de nœuds, une demande de transaction électronique pour une première cible de transaction à un deuxième nœud configuré pour gérer la première cible de transaction ;
recevoir, par l'intermédiaire du deuxième nœud, la demande de transaction électronique et décider, par l'intermédiaire de l'unité de gestion de contrat intelligente du deuxième nœud, en se référant à la première cible de transaction, s'il convient d'accorder au premier nœud un droit d'accès pour accéder aux données réelles de la première cible de transaction stockées dans la seconde unité de stockage du troisième nœud et stocker le droit d'accès dans le registre distribué ; et
stocker, par l'intermédiaire du premier nœud, les données réelles de la première cible de transaction dans la seconde unité de stockage du premier nœud si le droit d'accès est accordé au premier nœud par le troisième nœud, les données réelles de la première cible de transaction n'étant pas stockées dans les secondes unités de stockage des autres nœuds constituant la chaîne de blocs.

9. Procédé de masquage de données pour un système de transaction électronique selon la revendication 8,
dans lequel, lors de la réception d'une demande de transaction électronique relative à la première cible de transaction en provenance d'un troisième nœud parmi la pluralité de nœuds, l'unité de gestion de contrat intelligente du deuxième nœud détermine si oui ou non la première cible de transaction est un produit développé par un utilisateur du deuxième nœud,
dans un cas dans lequel la première cible de transaction n'est pas le produit développé, l'unité de gestion de contrat intelligente du troisième nœud accorde au troisième nœud le droit d'accès aux données réelles de la première cible de transaction stockées dans la seconde unité de stockage du second nœud,
dans un cas dans lequel la première cible de transaction est le produit développé, l'unité de gestion de contrat intelligente du troisième nœud détermine en outre si la première cible de transaction comprend ou non un produit introduit, et
dans un cas dans lequel la première cible de transaction inclut le produit introduit, l'unité de gestion de contrat intelligente du deuxième nœud accorde à un fournisseur du produit introduit le droit d'accès aux données réelles de la première cible de transaction stockées dans la seconde unité de stockage du deuxième nœud.

10. Procédé de masquage de données pour un système de transaction électronique selon la revendication 8,
dans lequel, dans un cas dans lequel la première cible de transaction ne comprend pas le produit introduit, l'unité de gestion de contrat intelligente du deuxième nœud stocke les données réelles de la première cible de transaction dans la seconde unité de stockage du deuxième nœud.
